# EUROPÄISCHE PATENTSCHRIFT

(11) **EP 4 038 688 B1**
(45) Veröffentlichungstag und Bekanntmachung des Hinweises auf die Patenterteilung: **01.07.2026**
(21) Anmeldenummer: 20775183.5
(22) Anmeldetag: 10.09.2020
(51) Int. Cl.: H01M 10/6563, H01M 10/613, H01M 10/6565, H01M 50/20

(54) **ENERGIESPEICHER MIT EINER SPEICHERMODULANORDNUNG MIT LÜFTER**
ENERGY STORE COMPRISING A STORE MODULE ASSEMBLY WITH FANS
ACCUMULATEUR D'ÉNERGIE COMPRENANT UN ENSEMBLE MODULE DE STOCKAGE DOTÉ DE VENTILATEURS

(30) Priorität: 02.10.2019 DE 102019006874
(43) Veröffentlichungstag der Anmeldung: 10.08.2022
(73) Patentinhaber: SEW-EURODRIVE GmbH & Co. KG, 76646 Bruchsal (DE)
(72) Erfinder: SCHMIDT, Josef, 76676 Graben-Neudorf (DE); ALTAN, Firat, 76131 Karlsruhe (DE); HAUCK, Matthias, 68723 Schwetzingen (DE); ZÖLLER, Thomas, 76646 Bruchsal (DE)
(86) Internationale Anmeldenummer: PCT/EP2020/025404
(87) Internationale Veröffentlichungsnummer: WO 2021/063539

(56) Entgegenhaltungen:
- KR-A- 20120 069 274
- US-A1- 2015 037 632
- US-A1- 2018 159 188

## Beschreibung

Die Erfindung betrifft einen Energiespeicher mit einer Speichermodulanordnung mit Lüfter.

Es ist allgemein bekannt, dass ein Energiespeicher zum Speichern elektrischer Energie einen Kondensator oder Akkumulator aufweist.

Aus der KR 10 2012 069 274 A ist als nächstliegender Stand der Technik ein Energiespeicher bekannt.

Aus der DE 10 2012 222 754 A1 ist ein Batteriesystem bekannt.

Aus der US 2015 / 0 037 632 A1 ist ein Batteriekühlsystem bekannt.

**Aus der** KR 2012 0069274 A **ist als nächstliegender Stand der Technik eine Batterie für Kraftfahrzeuge bekannt.**

**Aus der** US 2018 / 159188 A1 **ist eine Temperaturkonditionierungseinheit bekannt.**

**Aus der** US 2015/037632 A1 **ist ein Batteriekühlsystem bekannt.**

Der Erfindung liegt daher die Aufgabe zugrunde, einen Energiespeicher möglichst kompakt auszubilden.

Erfindungsgemäß wird die Aufgabe bei dem Energiespeicher nach den in Anspruch 1 angegebenen Merkmalen gelöst.

Wichtige Merkmale der Erfindung bei dem Energiespeicher mit einer Speichermodulanordnung mit Lüfter sind, dass der Lüfter als Radiallüfter ausgeführt ist, wobei axial durch die Speichermodulanordnung durchgehende Kanäle in einen Raumbereich münden, der von einem mit der Speichermodulanordnung verbundenen Deckelteil des Energiespeichers und der Speichermodulanordnung begrenzt wird,

wobei das Deckelteil eine axial durch das Deckelteil durchgehende Ausnehmung aufweist, welche vom Ansaugbereich des Lüfters, an der von der Speichermodulanordnung abgewandten Seite des Deckelteils, abgedeckt ist,
wobei der Energiespeicher eine Umlenkhaube, zur Umlenkung des geförderten Luftstroms in axiale Richtung, auf der von der Speichermodulanordnung abgewandten Seite des Deckelteils aufweist.

Von Vorteil ist dabei, dass der Energiespeicher kompakt ausbildbar ist. Denn die Verlustwärme wird effizient abgeführt. Dabei ist ein Lüfter zum aktiven Fördern eines Kühlluftstroms vorgesehen, der die Verlustwärme einerseits aus dem Inneren des Energiespeichers und andererseits von der Oberfläche des Energiespeichers aufnimmt. Somit ist eine Entwärmung ermöglicht. Auf diese Weise ist der Energiespeicher mit hohen Entladeströmen und Ladeströmen betreibbar, obwohl die Zellen, insbesondere Akkumulatorzellen oder Kondensatorzellen, wie Ultracap oder dergleichen, einander berührend angeordnet sind und somit der Energiespeicher kompakt ausgeführt ist.

Die Ausführung des Lüfters als Radiallüfter bewirkt somit eine Umlenkung des geförderten Luftstroms von der axialen Ansaugrichtung zur radialen Austrittsrichtung. Somit ist nur eine nochmalige Auslenkung um weitere 90° notwendig um den geförderten Luftstrom in axiale Richtung umzulenken mittels der Umlenkhaube und somit ein Entlangströmen des geförderten Luftstroms an der Außenfläche des Energiespeichers entlang zu ermöglichen. Bei einer vorteilhaften Ausgestaltung wird der vom Lüfter geförderte Luftstrom von der Umlenkhaube, insbesondere von einem Luftleitblech der Umlenkhaube, in axiale Richtung umgelenkt und strömt an einer Außenseite der Speichermodulanordnung entlang. Von Vorteil ist dabei, dass die Umlenkhaube nur eine Umlenkung um 90° ausführen muss und somit nur geringe Verluste durch das Umlenken erzeugt werden.

Bei einer vorteilhaften Ausgestaltung ist die Umlenkhaube mit der Speichermodulanordnung und/oder mit dem Deckelteil verbunden. Von Vorteil ist dabei, dass eine einfache Befestigung ausführbar ist.

Bei einer vorteilhaften Ausgestaltung überragt die Umlenkhaube seitlich die Speichermodulanordnung, so dass der zwischen Speichermodulanordnung und Umlenkhaube, insbesondere Luftleitblech der Umlenkhaube austretende Luftstrom, in axialer Richtung austritt. Von Vorteil ist dabei, dass der Energiespeicher auf einer Bodenfläche abstellbar ist und trotzdem mittels der Umlenkhaube ein Abstand zwischen Speichermodulanordnung und der Bodenfläche bewirkt wird, durch welchen der aus der Austrittsöffnung austretende Luftstrom strömt. Die Entwärmung des Energiespeichers ist somit sicher gewährleistbar.

Bei einer vorteilhaften Ausgestaltung sind die Kanäle voneinander beabstandet und/oder verlaufen zueinander parallel. Von Vorteil ist dabei, dass der Innenbereich des Energiespeichers gleichmäßig entwärmbar ist.

Bei einer vorteilhaften Ausgestaltung strömt der aus dem Lüfter austretende Luftstrom in einen zweiten Raumbereich ein, welcher von der Umlenkhaube und dem Deckelteil begrenzt ist,
wobei eine Austrittsöffnung zwischen der Umlenkhaube und Speichermodulanordnung vorgesehen ist, insbesondere zum Austreten des geförderten Luftstroms aus dem zweiten Raumbereich in die Umgebung. Von Vorteil ist dabei, dass der aus dem Lüfter austretende Luftstrom in dem von der Umlenkhaube zusammen mit dem Deckelteil begrenzten Raumbereich beruhigbar ist und somit an der Austrittsöffnung aus dem Raumbereich ein gleichmäßiges Ausströmen aus dem Raumbereich in die Umgebung, insbesondere entlang der äußeren Oberfläche der Energiespeicheranordnung.

Bei einer vorteilhaften Ausgestaltung durchströmt der vom Lüfter geförderte Luftstrom die Kanäle in zur Durchströmungsrichtung der Austrittsöffnung entgegengesetzter Richtung. Von Vorteil ist dabei, dass somit eine effiziente Entwärmung erreichbar ist, insbesondere vom Innenbereich und zusätzlich auch von der äußeren Oberfläche her.

Bei einer vorteilhaften Ausgestaltung ist die Drehachse des Lüfters parallel zur axialen Richtung ausgerichtet. Von Vorteil ist dabei, dass die vom als Radiallüfter ausgeführten Lüfter Luft axial ansaugbar ist, also im Ansaugbereich keine Umlenkung des Luftstroms stattfinden muss.

Bei einer vorteilhaften Ausgestaltung ist die Umlenkhaube als Stanzbiegeteil aus Blech gefertigt und das Luftleitblech ist ein abgewinkelter Bereich der Umlenkhaube. Von Vorteil ist dabei, dass ein Umlenken des vom Lüfter geförderten Luftstroms in einfacher Weise realisierbar ist.

Bei einer vorteilhaften Ausgestaltung weist der Lüfter für den aus ihm austretenden Luftstrom eine Austrittsmündung auf, insbesondere durch welche der vom Lüfter geförderte Luftstrom radial austritt,
wobei der von der Austrittsmündung überdeckte Umfangswinkelbereich mit dem von der Austrittsöffnung überdeckten Umfangswinkelbereich überlappt oder diesen umfasst. Von Vorteil ist dabei, dass der radial aus dem Lüfter austretende Luftstrom nicht am ganzen Umfang des Lüfters austritt, sondern nur an einer Stelle des Umfangs, die den aus dem Lüfter austretenden Luftstrom auf die Austrittsmündung richtet. Somit ist ein verlustbehaftetes Umlenken des Luftstroms nicht notwendig.

**Erfindungsgemäß** ist der lichte Durchmesser jedes der Kanäle in axialer Richtung innerhalb der Speichermodulanordnung periodisch veränderlich,
wobei die Speichermodulanordnung in axialer Richtung hintereinander angeordnete Module aufweist, wobei der lichte Durchmesser jeweils im Verbindungsbereich zweier jeweiligen Module seinen Maximalwert aufweist. Von Vorteil ist dabei, dass der Luftstrom nicht laminar durch die Kanäle durchströmt, sondern turbulente Strömung aufweist, so dass ein verbesserter Wärmeübergang von der Speichermodulanordnung zum Luftstrom erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

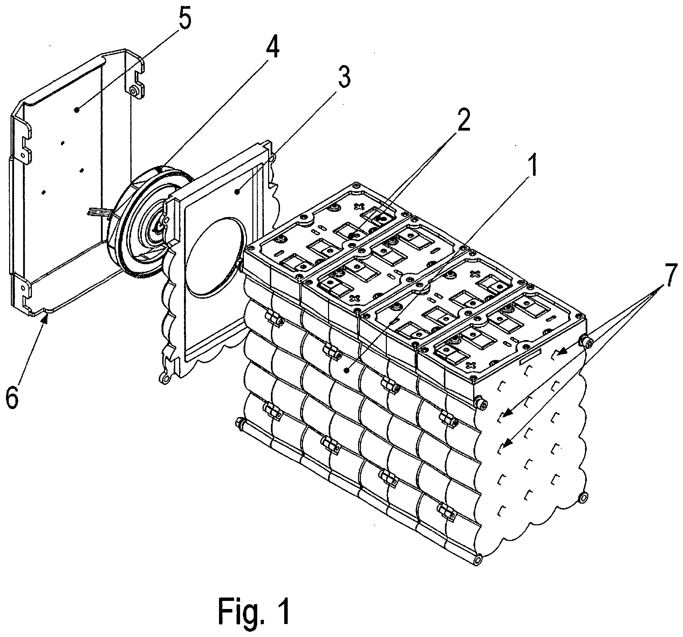

In der Figur 1 ist eine Schrägansicht eines explodiert dargestellten Energiespeichers gezeigt.

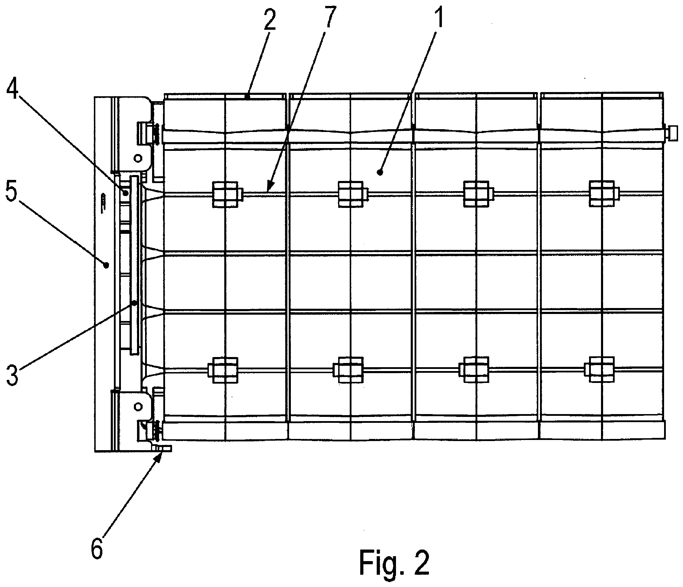

In der Figur 2 ist eine zugehörige Seitenansicht dargestellt.

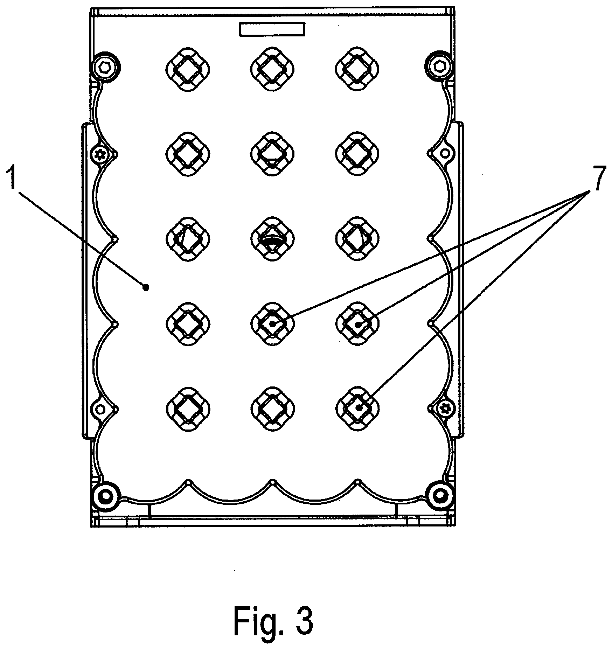

In der Figur 3 ist eine Draufsicht auf die Speichermodulanordnung dargestellt.

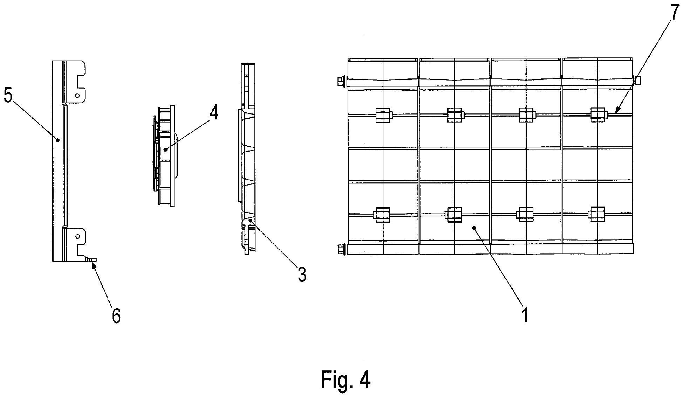

In der Figur 4 ist eine Seitenansicht auf den explodiert dargestellten Energiespeicher gezeigt.

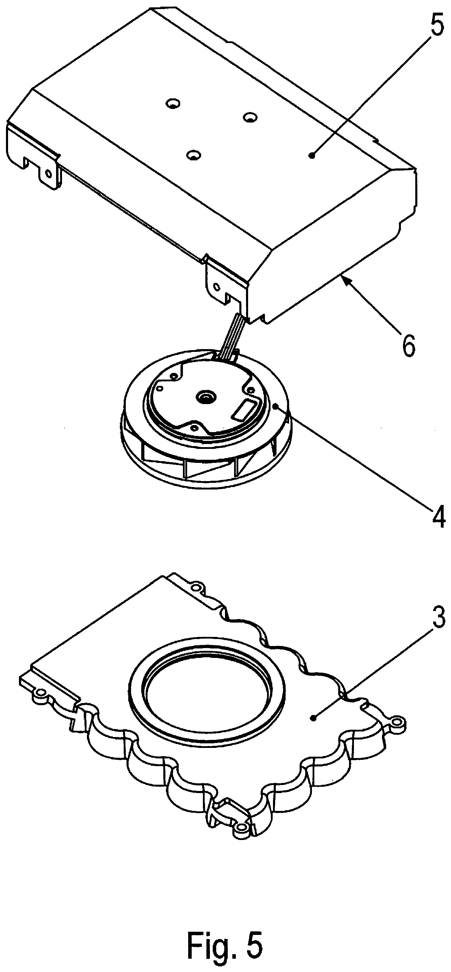

In der Figur 5 sind Einzelteile der Figur 1 aus einer Blickrichtung näher dargestellt.

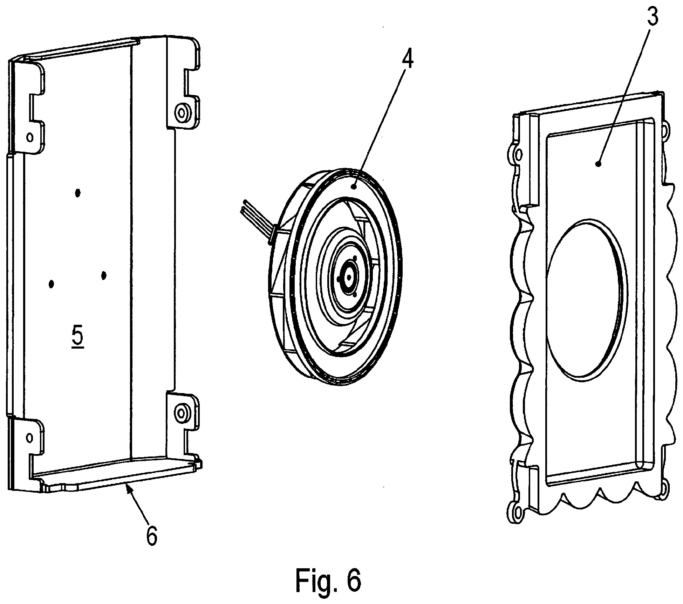

In der Figur 6 sind die Einzelteile aus einer anderen Blickrichtung näher dargestellt.

Wie in den Figuren dargestellt, weist ein erfindungsgemäßer Energiespeicher eine Speichermodulanordnung 1 auf. Diese weist regelmäßig angeordnete Zellen, insbesondere Doppelschichtkondensatoren, wie Ultracaps, und/oder Akkumulatorzellen, auf, welche elektrisch miteinander verschaltet sind. Vorzugsweise sind hierzu Reihenschaltungen aus Zellen gebildet, die miteinander parallel verschaltet sind. Somit ist eine gewünschte Spannung zur Verfügung stellbar.

Die Anschlüsse 2 sind an der Oberseite des Energiespeichers angeordnet.

Ein Radiallüfter 4 ist zur Förderung eines Kühlluftstroms vorgesehen, welcher den Energiespeicher durchströmt und somit entwärmt. Hierzu sind axial durchgehende, voneinander beabstandete, zueinander parallel ausgerichtete Kanäle in der Speichermodulanordnung 1 vorgesehen, durch welche der vom Radiallüfter 4 geförderte Luftstrom hindurchgeführt wird.

An seiner dem Radiallüfter 4 zugewandten Stirnseite ist ein Deckelteil 3 auf die Speichermodulanordnung 1 aufgesetzt und dicht, insbesondere luftdicht, mit der Speichermodulanordnung 1 verbunden. Hierzu weist das Deckelteil 3 eine Vertiefung auf, in welche die Kanäle münden. Die Stirnseite der Speichermodulanordnung 1 ist an das Deckelteil 3 angelegt. Ein am äußerer Rand des Deckelteils 3 umlaufend ausgebildeter Vorsprung, insbesondere Wulst, berührt die Speichermodulanordnung 1 und dichtet derart ab, dass der geförderte Luftstrom seitlich nicht austritt, also am Rand und/oder am Berührbereich zwischen Deckelteil 3 und Speichermodulanordnung 1 nicht austritt.

Da die Speichermodulanordnung 1 bevorzugt aus zylindrisch ausgeführten Zellen zusammengesetzt ist, weist der Rand des Deckelteils 3, insbesondere an seiner der Speichermodulanordnung 1 zugewandten Seite, Einbuchtungen, insbesondere nach radial außen gerichtete Vertiefungen auf, die jeweils einem Zylindersegment entsprechen. Somit ist der Rand des Deckelteils 3 entsprechend dem äußeren Verlauf der Stirnseite der Speichermodulanordnung 1 geformt.

Das Deckelteil 3 weist außerdem eine axial durchgehende, insbesondere kreisrunde, Ausnehmung auf, durch welche der vom Radiallüfter 4 geförderte Luftstrom hindurchströmt. Dabei ist der lichte Durchmesser der Ausnehmung größer als der Durchmesser des Ansaugbereichs des Radiallüfters 4, insbesondere also größer als der Innendurchmesser des in den Radiallüfter 4 eintretenden, vom Radiallüfter 4 angesaugten und somit geförderten Luftstroms.

Das Gehäuse des auf der von der Speichermodulanordnung 1 abgewandten Seite des Deckelteils 3 angeordneten Radiallüfters 4 wird dicht, insbesondere luftdicht, mit dem Deckelteil 3 verbunden. Auf der anderen Seite, also auf der von der Speichermodulanordnung 1 und/oder von dem Deckelteil 3 abgewandten Seite des Radiallüfters 4 ist eine Umlenkhaube 5 angeordnet.

Somit ist der Radiallüfter 4, insbesondere axial, zwischen der Umlenkplatte 5 und dem Deckelteil 3 angeordnet.

Die Umlenkhaube 5 ist zur Umlenkung des vom Radiallüfter 4 nach radial außen gerichteten und/oder geförderten Luftstroms vorgesehen. Dabei wird der eigentlich nach radial außen vom Radiallüfter 4 geförderte Luftstrom in axiale Richtung umgelenkt, also in die zum vom Radiallüfterrad 4 angesaugten Luftstrom entgegengesetzte Richtung.

Hierfür ist an der Umlenkhaube 5 ein Luftleitblech 6 vorgesehen oder ein entsprechend geformter Bereich an der Umlenkhaube ausgeformt. Im Folgenden wird in jedem Fall von einem Luftleitblech 6 gesprochen. Dieses ist also einstückig, also einteilig, oder alternativ zweiteilig, insbesondere zweistückig, an oder mit der Umlenkhaube 5 ausbildbar.

Dabei wird der vom Radiallüfter 4 nach radial außen geförderte Luftstrom von dem Luftleitblech 6 beziehungsweise von dem entsprechend geformten Bereich in axiale Richtung umgelenkt.

Auf diese Weise ist die Unterseite der Speichermodulanordnung 1 von diesem umgelenkten Luftstrom unterspülbar.

Somit wird der durch die Kanäle geförderte Luftstrom in der Vertiefung des Deckelteils 3 gesammelt und von dort durch die axial durchgehende Ausnehmung des Deckelteils zum Ansaugbereich des Radiallüfters 4 geführt. Durch Umlenkung des aus dem Radiallüfter 4 austretenden Luftstroms mittels der Umlenkhaube 5 strömt der umgelenkte Luftstrom an der Unterseite der Speichermodulanordnung 1 entlang. Somit findet nicht nur im Inneren der Speichermodulanordnung 1 eine Entwärmung statt, sondern auch an der Außenseite.

Die Speichermodulanordnung 1 weist in axialer Richtung hintereinander angeordnete Module auf. Somit sind je nach Energiespeicherkapazität eine entsprechende Anzahl von Modulen seriell anordenbar und miteinander verbindbar.

Die axiale Richtung ist parallel zur Längsachse der Speichermodulanordnung.

Der lichte Durchmesser jedes der Kanäle in axialer Richtung innerhalb der Speichermodulanordnung ist periodisch veränderlich, wobei der lichte Durchmesser jeweils im Verbindungsbereich zweier jeweiligen Module seinen Maximalwert aufweist. Somit ist der Kanal jeweils am engsten in der Mitte des jeweiligen Moduls.

Jedes der Module weist ein Gehäuseteil auf, in welchem Zellen aufgenommen sind. Die Zellen sind jeweils zylindrisch ausgeformt, so dass der Aufnahmebereich des jeweiligen Gehäuseteils entsprechend innenzylindrische Bereiche aufweist. Jede Zelle ist entweder als Kondensator, insbesondere Doppelschichtkondensator, oder als Akkumulatorzelle ausgeführt. Die Gehäuseteile zweier jeweils benachbarten Module der Speichermodulanordnung 1 sind miteinander mittels einer Schraube lösbar verbunden. Die Zellen sind elektrisch miteinander verschaltet.

Bei weiteren erfindungsgemäßen Ausführungsbeispielen sind an der Umlenkhaube 5 weitere Luftleitbleche als Umlenkbereiche ausgeführt, so dass der umgelenkte Luftstrom auch an anderen Seiten der Speichermodulanordnung 1 entlangströmt.

### Bezugszeichenliste

1 Speichermodulanordnung
2 Anschluss
3 Deckelteil
4 Radiallüfter
5 Umlenkhaube
6 Luftleitblech
7 Kanal, axial durchgehend

## Patentansprüche

1. Energiespeicher mit einer Speichermodulanordnung (1) mit Lüfter,
wobei der Lüfter als Radiallüfter (4) ausgeführt ist,
wobei **axial** durch die Speichermodulanordnung durchgehende Kanäle (7) in einen Raumbereich
münden, der von einem mit der Speichermodulanordnung verbundenen Deckelteil (3) des Energiespeichers und der Speichermodulanordnung begrenzt wird,
wobei das Deckelteil eine **axial** durch das Deckelteil durchgehende Ausnehmung aufweist, welche vom Ansaugbereich des Lüfters an der von der Speichermodulanordnung abgewandten Seite des Deckelteils abgedeckt ist,
wobei der Energiespeicher eine Umlenkhaube (5) zur Umlenkung des geförderten Luftstroms in axiale Richtung auf der von der Speichermodulanordnung abgewandten Seite des Deckelteils aufweist,
wobei die axiale Richtung parallel zur Längsachse der Speichermodulanordnung ist,
**dadurch gekennzeichnet, dass**
**der lichte Durchmesser jedes der Kanäle in axialer Richtung innerhalb der Speichermodulanordnung periodisch veränderlich ist,**
**wobei die Speichermodulanordnung in axialer Richtung hintereinander angeordnete Module aufweist, wobei der lichte Durchmesser jeweils im Verbindungsbereich zweier jeweiligen Module seinen Maximalwert aufweist, zur Bewirkung einer turbulenten Strömung in den Kanälen.**

2. Energiespeicher nach Anspruch 1,
**dadurch gekennzeichnet, dass**
der vom Lüfter geförderte Luftstrom von der Umlenkhaube, insbesondere von einem Luftleitblech (6)
der Umlenkhaube, in axiale Richtung umgelenkt und an einer Außenseite der Speichermodulanordnung entlang strömt.

3. Energiespeicher nach einem der vorangegangenen Ansprüche,
**dadurch gekennzeichnet, dass**
die Umlenkhaube mit der Speichermodulanordnung und/oder mit dem Deckelteil verbunden ist.

4. Energiespeicher nach einem der vorangegangenen Ansprüche,
**dadurch gekennzeichnet, dass**
die Umlenkhaube seitlich die Speichermodulanordnung überragt, so dass der zwischen Speichermodulanordnung und Umlenkhaube, insbesondere Luftleitblech der Umlenkhaube austretende Luftstrom, in axialer Richtung austritt.

5. Energiespeicher nach einem der vorangegangenen Ansprüche,
**dadurch gekennzeichnet, dass**
die Kanäle voneinander beabstandet sind und/oder zueinander parallel verlaufen.

6. Energiespeicher nach einem der vorangegangenen Ansprüche,
**dadurch gekennzeichnet, dass**
der aus dem Lüfter austretende Luftstrom in einen zweiten Raumbereich einströmt, welcher von der Umlenkhaube und dem Deckelteil begrenzt ist,
wobei eine Austrittsöffnung zwischen der Umlenkhaube und Speichermodulanordnung
vorgesehen ist, insbesondere zum Austreten des geförderten Luftstroms aus dem zweiten Raumbereich in die Umgebung.

7. Energiespeicher nach einem der vorangegangenen Ansprüche,
**dadurch gekennzeichnet, dass**
der vom Lüfter geförderte Luftstrom die Kanäle in zur Durchströmungsrichtung der Austrittsöffnung entgegengesetzter Richtung durchströmt.

8. Energiespeicher nach einem der vorangegangenen Ansprüche,
**dadurch gekennzeichnet, dass**
die Drehachse des Lüfters parallel zur axialen Richtung ausgerichtet ist.

9. Energiespeicher nach einem der vorangegangenen Ansprüche,
**dadurch gekennzeichnet, dass**
die Umlenkhaube als Stanzbiegeteil aus Blech gefertigt ist und das Luftleitblech ein abgewinkelter Bereich der Umlenkhaube ist.

10. Energiespeicher nach einem der vorangegangenen Ansprüche,
**dadurch gekennzeichnet, dass**
der Lüfter für den aus ihm austretenden Luftstrom eine Austrittsmündung aufweist, insbesondere durch welche der vom Lüfter geförderte Luftstrom radial austritt,
wobei der von der Austrittsmündung überdeckte Umfangswinkelbereich mit dem von der Austrittsöffnung überdeckten Umfangswinkelbereich überlappt oder diesen umfasst.

## Claims

1. Energy storage device comprising a storage module arrangement (1) having a fan, wherein the fan is configured as a centrifugal fan (4),
wherein channels (7) that axially pass through the storage module arrangement open into a spatial region that is defined by a cap part (3) of the energy storage device, said cap part being connected to the storage module arrangement, and by the storage module arrangement,
wherein the cap part has a cut-out which axially passes through the cap part and which is covered by the suction region of the fan on the cap-part side facing away from the storage module arrangement,
wherein the energy storage device has a deflection cover (5), for deflecting the conveyed air stream into the axial direction, on the cap-part side facing away from the storage module arrangement,
wherein the axial direction is parallel to the longitudinal axis of the storage module arrangement,
**characterised in that**
the clear diameter of each of the channels in the axial direction within the storage module arrangement periodically changes,
wherein the storage module arrangement has modules arranged one behind the other in the axial direction, wherein the clear diameter is at its maximum value in the connection region between each two modules in order to bring about a turbulent flow in the channels.

2. Energy storage device according to claim 1,
**characterised in that**
the air stream conveyed by the fan is deflected into the axial direction by the deflection cover, in particular by an air baffle (6) of the deflection cover, and flows along an external side of the storage module arrangement.

3. Energy storage device according to any of the preceding claims,
**characterised in that**
the deflection cover is connected to the storage module arrangement and/or to the cap part.

4. Energy storage device according to any of the preceding claims,
**characterised in that**
the deflection cover projects laterally beyond the storage module arrangement such that the air stream exiting between the storage module arrangement and the deflection cover, in particular the air baffle of the deflection cover, exits in the axial direction.

5. Energy storage device according to any of the preceding claims,
**characterised in that**
the channels are spaced apart from one another and/or run in parallel with one another.

6. Energy storage device according to any of the preceding claims,
**characterised in that**
the air stream exiting the fan flows into a second spatial region defined by the deflection cover and the cap part,
wherein an outlet opening is provided between the deflection cover and the storage module arrangement, in particular for the conveyed air stream to exit the second spatial region and enter the surroundings.

7. Energy storage device according to any of the preceding claims,
**characterised in that**
the air stream conveyed by the fan flows through the channels in the opposite direction to the throughflow direction of the outlet opening.

8. Energy storage device according to any of the preceding claims,
**characterised in that**
the axis of rotation of the fan is oriented in parallel with the axial direction.

9. Energy storage device according to any of the preceding claims,
**characterised in that**
the deflection cover is made from sheet metal as a punched and bent part, and the air baffle is an angled region of the deflection cover.

10. Energy storage device according to any of the preceding claims,
**characterised in that**
the fan has an outlet aperture for the air stream exiting said fan, the air stream conveyed by the fan in particular exiting radially through said outlet aperture,
wherein the circumferential-angle region covered by the outlet aperture overlaps with or encompasses the circumferential-angle region covered by the outlet opening.

## Revendications

1. Dispositif de stockage d'énergie avec une agencement de modules de stockage avec ventilateur, le ventilateur étant réalisé comme ventilateur radial (4), des canaux (7) traversant axialement l'agencement de modules de stockage débouchant dans une zone d'espace qui est délimitée par un élément de couvercle (3) du dispositif de stockage d'énergie relié à l'agencement de modules de stockage et par l'agencement de modules de stockage, le élément de couvercle présentant un évidement traversant axialement le élément de couvercle, qui est recouvert de la zone d'aspiration du ventilateur du côté de l'élément de couvercle opposé à l'agencement de modules de stockage, le dispositif de stockage d'énergie comportant un capot de dérivation (5), pour la dérivation du flux d'air acheminé en direction axiale du côté de l'élément de couvercle opposé à l'agencement de modules de stockage, la direction axiale étant parallèle à l'axe longitudinal de l'agencement de modules de stockage, **caractérisé en ce que** le diamètre libre de chacun des canaux est périodiquement variable en direction axiale à l'intérieur de l'agencement de modules de stockage, l'agencement de modules de stockage comportant des modules disposés successivement en direction axiale, le diamètre libre atteignant sa valeur maximale dans la zone de connexion de chaque paire de modules respectifs, afin de provoquer un écoulement turbulent dans les canaux.

2. Dispositif de stockage d'énergie selon la revendication 1, **caractérisé en ce que** le flux d'air acheminé par le ventilateur est dérivé par le capot de dérivation, en particulier par un déflecteur d'air (6) du capot de dérivation, en direction axiale et s'écoule le long d'une face extérieure de l'agencement de modules de stockage.

3. Dispositif de stockage d'énergie selon l'une des revendications précédentes, **caractérisé en ce que** le capot de dérivation est relié à l'agencement de modules de stockage et/ou à l'élément de couvercle.

4. Dispositif de stockage d'énergie selon l'une des revendications précédentes, **caractérisé en ce que** le capot de dérivation dépasse latéralement l'agencement de modules de stockage, de sorte que le flux d'air sortant entre l'agencement de modules de stockage et le capot de dérivation, en particulier le déflecteur d'air du capot de dérivation, sort en direction axiale.

5. Dispositif de stockage d'énergie selon l'une des revendications précédentes,
**caractérisé en ce que** les canaux sont espacés les uns des autres et/ou sont parallèles entre eux.

6. Dispositif de stockage d'énergie selon l'une des revendications précédentes, **caractérisé en ce que** le flux d'air sortant du ventilateur s'écoule dans une deuxième zone d'espace, qui est délimitée par le capot de dérivation et l'élément de couvercle, un orifice de sortie étant prévuentre le capot de dérivation et l'agencement de modules de stockage, en particulier pour sortir le flux d'air acheminé de la deuxième zone d'espace vers l'environnement.

7. Dispositif de stockage d'énergie selon l'une des revendications précédentes, **caractérisé en ce que** le flux d'air acheminé par le ventilateur traverse les canaux dans une direction opposée au sens d'écoulement de l'orifice de sortie.

8. Dispositif de stockage d'énergie selon l'une des revendications précédentes, **caractérisé en ce que** l'axe de rotation du ventilateur est orienté parallèlement à la direction axiale.

9. Dispositif de stockage d'énergie selon l'une des revendications précédentes, **caractérisé en ce que** le capot de dérivation est fabriqué comme pièce emboutie et pliée en tôle et le déflecteur d'air est une zone coudée du capot de dérivation.

10. Dispositif de stockage d'énergie selon l'une des revendications précédentes, **caractérisé en ce que** le ventilateur présente une embouchure de sortie pour le flux d'air sortant de celui-ci, en particulier par laquelle le flux d'air acheminé par le ventilateur sort radialement, le secteur angulaire recouvert par l'embouchure de sortie chevauchant ou englobant le secteur angulaire recouvert par l'orifice de sortie.
